**Europäisches Patentamt**

**European Patent Office**

**Office européen des brevets**

(19)

(11) Publication number: **0 109 734**
**A2**

(12) # EUROPEAN PATENT APPLICATION

(21) Application number: **83305440.6**

(22) Date of filing: **16.09.83**

(51) Int. Cl.³: **G 05 B 19/04**

(30) Priority: **24.09.82 US 422829**

(43) Date of publication of application:
**30.05.84 Bulletin 84/22**

(84) Designated Contracting States:
**AT BE CH DE FR GB IT LI LU NL SE**

(71) Applicant: **SWANSON ENGINEERING &**
**MANUFACTURING CO.**
**1133 West Redondo Boulevard**
**Inglewood California(US)**

(72) Inventor: **Power, John J.**
**210 Monte Grigio**
**Pacific Palisades California(US)**

(74) Representative: **Smith, Philip Antony et al,**
**REDDIE & GROSE 16 Theobalds Road**
**London WC1X 8PL(GB)**

(54) **System for monitoring and control of electrical drive devices.**

(57) A Universal Control Module 10 is adaptable to the operating characteristics of any of the conventional electrical drive devices employed in electrical operating systems. The UCM 10 includes a microprocessor and memory, by virtue of which it becomes tailored to the characteristics of a given device 32 to be controlled upon plug-in of the UCM into a bussed rack associated with a Communication Module 26 preprogrammed with the set values for the drive. A basic control system includes corresponding Electrical Interface Modules 30 and their associated Communication Module 36 interconnected via a serial data communication link 38 extending between the respective Communication Modules for the UCMs and EIMs. As an option, an associated UCM and EIM can be directly connected via parallel leads 40 for direct control of a drive unit.

Where appropriate, the basic system is incorporated with a plurality of other basic systems in a second level control system, accessed by a Programmable Logic Module 120. In turn, for large extended systems, such as may be utilized in a manufacturing plant, the second level system may be incorporated with a plurality of other second level systems, all intercommunicating via a data highway 112 and being accessed through a Supervisory Control Station 110.

./...

EP 0 109 734 A2

Croydon Printing Company Ltd.

THIRD LEVEL  SECOND LEVEL  FIRST LEVEL

Fig. 6

1

SYSTEM FOR MONITORING AND CONTROL OF ELECTRICAL DRIVE DEVICES

This invention relates to the monitoring and control of electrical devices, including but not limited to motor drives, valve operators, circuit breakers, and other electrical switching operators.

For several decades the control of motors, valves, and other electrical drives, e.g. Starting/Stopping, Opening/Closing, and detecting the run state or final element position, has been accomplished by direct wiring of pushbuttons, switches, and indicator lights in the drive control circuitry. Electromechanical relays and timers have been used to supplement the switches and lights to accomplish sequential programming and interlocking of multi-unit operating systems.

In more recent years, systems incorporating solid state circuit cards and remote transmitter/receivers have been developed to eliminate electromechanical devices and to reduce installation wiring requirements. These systems are known as hard-wired logic systems and do not incorporate software programs.

The most recent application in the field of electrical system control has been the use of microprocessors and, more specifically, the programmable controller. The programmable controller is a microprocessor specifically designed for the monitoring and control of electrical systems. The majority of such devices utilize a "ladder diagram" concept for the software programming of the unit. The programmable controller works in conjunction with input/output interface modules. These interface modules utilize optical isolation as the principal means for isolation between the low voltage circuitry of the programmable processor and the high voltage circuitry of the electrical devices being controlled. These input/output modules may be mounted in the immediate area of the processor or may be remotely mounted. In the case of the remote mounted units, serial communication techniques are used to transmit data betweeen the processor and the remote input/output modules.

The programmable controller or microprocessor, as it is used today, is a general purpose, software programmed device. All aspects of control, including the basic circuits for motor control, valve control, etc., must be developed in the software program. This is true for each unit making up a system. There is no standard pre-programmed circuitry available. All such programming for a given operating unit is contained within a single general purpose processor and its associated memory. The input/output interface circuits are randomly mounted and must be assigned specific addresses to identify their function in the overall scheme and to correlate this function within the software program. All in all, the general purpose concept and design of the programmable controller or microprocessor and its associated input/output circuitry require a high degree of organization and unit addressing, as well as extensive duplication in the development of the total system software program. In an electrical control system of this type, the software programming typically represents a significant proportion of the overall system cost, must be redone and specifically tailored for each different system, and generally requires extensive testing and debugging before the program and system are acceptable.

In brief, arrangements in accordance with the present invention comprise a plurality of specifically designed units, each including its own microprocessor and related circuitry to enable it to be adapted to specific control functions while subject to intercommunication with and response to control demands from machine-to-machine and human-to-machine interface and peripheral devices. Various arrangements in accordance with the present invention are organized in various levels for differing degrees of control complexity and sophistication. At the basic level of control, an individual drive controller is capable of operating independently of the remainder of the system, yet can be controlled from supervisory programming at a higher level, should it be desired to modify its particular control function at any given time.

## UNIVERSAL CONTROL MODULE (UCM)

The basis of this new invention is the Universal Control Module, referred to herein as the UCM. The UCM is a microprocessor-based control station complete with pushbutton switches and LED status lights. The station printed circuit board contains the microprocessor chip, programmable Eprom, and other associated semiconductor components required to provide a complete functioning unit. A single UCM is provided for each drive device, e.g. motor, valve, etc., in a given system. A standard universal program is incorporated in the station EPROM. Embodied in this

4

program are a multiplicity of software controllable switching gates (called "P" switches) which can be appropriately set to provide the desired control functions. Such functions can vary from the simplest of control for a non-reversing motor through increasing degrees of complexity with multiple interlocks, timing functions, auxiliary outputs, single or dual coil valve operators with limit switch feedback, standard circuit breaker controls, etc. "P" switch selections are also available for remote/local switching, jog circuit selection, flashing and audible alarm functions and auto sequencing. It is the combination of the all-inclusive control program and the selectable "P" switches that makes the control module truly universal. This is effective to the extent that a control module associated with a first drive unit (for example, a conveyor motor) can be disconnected, merely by unplugging from its bussed rack portion, and inserted in another rack position associated with another, entirely different, drive unit (such as a valve actuator) and it will be immediately modified to operate as a valve controller, instantly upon plug-in. The groupings of "P" switches for commonly used motor and valve circuits are coded such that a given unit drive control can be readily selected with a simple four-character alphanumeric code. "P" switch selections can be down-loaded either from a master control station, to be discussed later, or from a special purpose hand-held programming device.

## ELECTRICAL INTERFACE MODULE (EIM)

Each Universal Control Module (UCM) is provided with a corresponding Electrical Interface Module (EIM). The EIM contains the input/output interface devices which isolate the low level microprocessor circuitry of the UCM from the higher voltage control circuitry for the drive device. The EIM is a standard interface module containing up to six optically isolated input circuits and two optically isolated output circuits. As in the case of its companion UCM, the EIM is dedicated to a given drive unit. If more than six input and two output circuits are required, a second standard EIM can be added and connected to the same UCM. Thus, a single control loop consisting of one UCM and two EIMs can encompass a total of ten input circuits and three output circuits (the UCM is limiting in the case of the output circuits).

A main objective of this invention is to provide maximum flexibility with standard software programming, yet at the same time maintain a single-loop, stand-alone control concept for each unit drive. This is accomplished through the use of a single UCM and companion EIM assigned to a given drive unit. A single loop is capable of handling up to ten circuit inputs associated with the unit drive and three circuit outputs.

Both the UCM and the EIM are plug-in type devices. Multiple UCM units plug into modular mounting racks provided with common bussing for power distribution to the UCMs and for system intercommunication. Similarly, multiple EIMs plug into a standard mounting rack with similar type bussing.

The system of this invention provides the flexibility for close coupling or remote mounting of the EIM with relation to the UCM. Close coupled units will intercommunicate via a single multiwire cable. Remote mounted EIMs will communicate with their respective UCMs via a common serial communication link. The standard module provides for either parallel or serial communication.

### COMMUNICATION MODULE (CM)

Utilization of serial communication requires the addition of

6

Communication Modules (CMs) at the UCM rack and at the EIM rack. In both cases, the CM module can service up to 16 control loops. The CMs are plug-in units and mount in their respective UCM and EIM racks.

The CM associated with a given UCM rack also incorporates non-volatile memory for storing the "P" switch settings in the UCMs. A single UCM rack will receive up to 16 UCMs. A feature of this invention is the retention of the "P" switch settings in non-volatile memory in the Communication Module. Once a given UCM position is programmed, stations can be removed and inserted without concern for loss of "P" switch settings. Whenever a station is inserted into a rack, the "P" switches are automatically set by the values retained in the CM. The same is true on POWER-UP. All UCMs will be automatically programmed from "P" switch settings held in memory in the CM. Each CM has an auxiliary input port for receiving a hand programmer. With this facility, control station programs can be set or changed as required. This facility also provides monitoring of communication links for trouble shooting and maintenance purposes.

Discussion of the new system to this point has been limited to the stand-alone Universal Control Module, referred to as the UCM, its associated Electrical Interface Module, referred to as the EIM, and the Communication Module, CM, required to direct serialized communication between the UCMs and their associated EIMs.

PROGRAMMABLE LOGIC MODULE (PLM)

To further facilitate the use of the microprocessor based UCMs, the system of the invention includes a Programmable Logic Module referred to as the PLM. This unit contains a microprocessor with necessary utility programs, memory banks for user programs, data and address busses, and serial and parallel ports for external communication. The PLM contains the customer's programs for the functional operation of all equipment drives, valve operators, process variables, and other operating devices as interrelated to form an operating system. This programming specifically defines the interlocking, sequencing, and special programming of the overall system. The PLM incorporates standard programming techniques for the development of electrical control systems. As such, software programming experience on the part of the user is not required in order to take advantage of its logic capabilities.

The PLM communicates serially via the CM with associated UCMs and receives all status pertinent to the total system operation. This includes process variable status limits and preset values as required. The Programmable Logic Module continuously monitors the status of the various UCMs plus the added process variable inputs and acts on these in accordance with the user program. Commands are transmitted from the PLM to the UCMs to operate specific devices as required.

The Programmable Logic Module also functions as a system interface to graphic CRT displays at Supervisory Control Stations, and/or to other Programmable Logic Modules that are in turn controlling other plant operating units. Communication between multiple PLM systems, graphic displays, and control terminals is handled over serial links referred to as data highways. The complete status of all operating units, as monitored by the UCMs and in turn transmitted to the PLMs, is retransmitted by the PLM and displayed on the graphic display terminal. Operator commands initiated at this terminal are transmitted to the PLM and in turn directed to the specific UCM to change the state of an operating device.

The purpose of this new system is to provide a hierarchy of control equipment, the basis of which is a Universal Control Module which, with its associated EIM, constitutes a single loop control system for a given unit drive. This is expanded through the use of the PLM to a second level operating system, which can monitor and control a multiple grouping of UCM stations interrelated to each other and to the process being controlled by the user program resident in the PLM. A third level of control further expands the system to the use of multiple PLMs and their associated UCMs interconnected via a data highway to a remote central operating station. Thus the system provides the capability for monitoring and controlling a very small system with minimal control loops or a very large system with multiple operating groups and hundreds of control devices.

In the drawings:

Fig. 1 is a partial isometric view representing a portion of the embodiment of the present invention, including a Universal Control Module;

Fig. 2 is a block diagram representing a second level control system in accordance with the present invention, including the arrangement of Fig. 1;

Fig. 3 is a functional block diagram representing the circuitry of the Universal Control Module of Fig. 1;

Fig. 4A is a functional block diagram representing the circuitry of a Communication Module for the Universal Control Module of Fig. 1;

Fig. 4B is a functional block diagram representing the circuitry of a slightly different Communication Module for an Electrical Interface Module, one of the elements of Fig. 2;

Fig. 5 is a functional block diagram representing the circuitry of a Programmable Logic Module, another of the elements of Fig. 2; and

Fig. 6 is a schematic block diagram representing a third level system in accordance with the present invention, showing the interconnection of a plurality of second level systems of the type illustrated in Fig. 2.

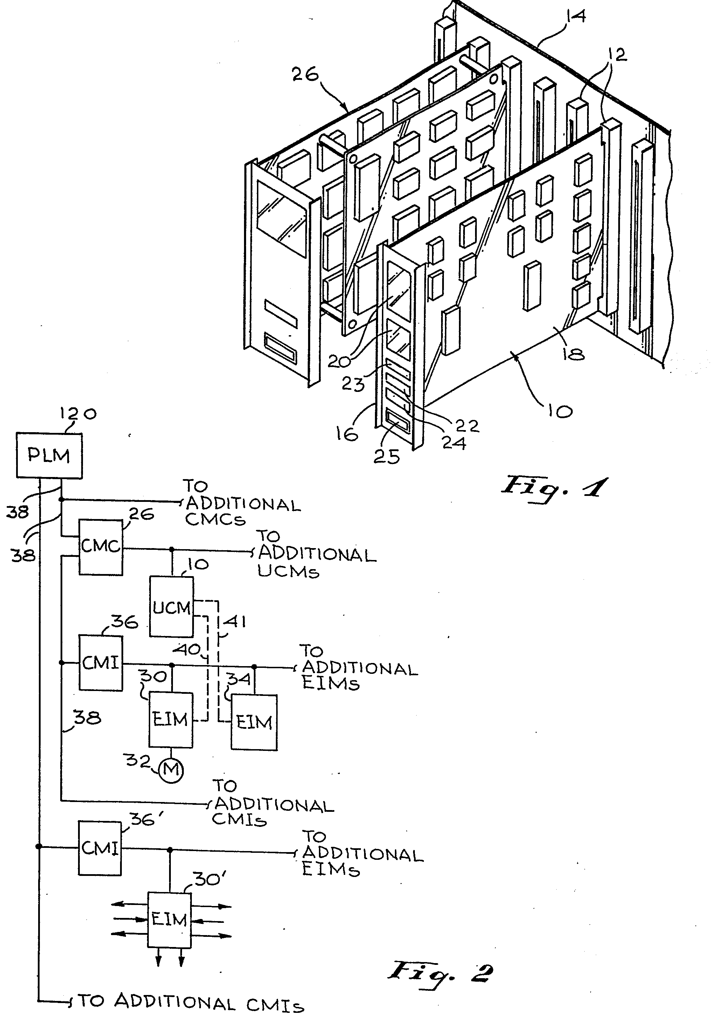

Fig. 1 shows a Universal Control Module 10 in accordance with the present invention mounted in a card connector 12, one of 18 connectors on a printed circuit motherboard in a UCM enclosure. The UCM 10 comprises a front panel strip 16 mounted to the front edge of a printed circuit board 18 on which the various integrated circuit modules and other components making up the UCM circuit are mounted in conventional fashion. The front panel strip 16 is shown bearing a plurality of indicator lights 20 (typically LEDs) for providing a status indication of UCM circuits and the drive with which the UCM is associated, plus a START pushbutton 22, a STOP pushbutton 24 for controlling the drive unit and a LOCAL/REMOTE switch 23 for selection of control mode. A replaceable label 25 indicates the drive unit with which the UCM is associated. A communication module 26 is shown for performing various functions related to the operation of the individual UCMs, such as 10, mounted in the card connectors 12 of the rack 14.

Fig. 2 is a block diagram showing the interconnection of UCMs such as 10 in a system for controlling a plurality of electrical devices (commonly referred to as drives). In this diagram, a single UCM 10 is shown connected to an associated UCM communication module (CMC) 26. The card connectors 12 and

motherboard of Fig. 1 have been omitted for simplicity in the system of Fig. 2, but it is indicated that additional UCMs may be connected in a single rack associated with the CMC 26 up to a maximum of 16 UCMs. Each UCM 10 is associated with at least one electrical interface module (EIM) 30, shown in Fig. 2 connected to a motor 32 as the drive being controlled. The EIM 30 and other EIMs, such as EIM 34, up to a maximum of 16, are mounted in groupings and each such group is provided with a communications module (CMI) 36. A serial data link 38 interconnects the CMC 26 and the CMI 36 for bidirectional transmission of data signals between the UCMs and the EIMs. Other serial data links 38 interconnect other elements of the system, such as the PLM with the CMCs and CMIs. Each serial data link 38 is actually a bidirectional data transmission path for transmitting serial data in both directions.

The UCM 10 with its associated CMC 26 and corresponding EIM 30, motor drive unit 32 and CMI 36 represents the basic control loop or first level control system in accordance with the present invention. Thus, the single drive unit 32 is provided with a single loop, stand alone control system in which the preprogrammed control functions, established in the CMC 26 for the UCM 10 to be associated with the drive unit 32, serve to provide complete control of the drive unit 32 under all operating conditions. As mentioned above, the UCM 10 and the EIM 30 are plug-in type devices, each being mounted in its corresponding rack which is provided with common bussing for power distribution to the respective modules and for system intercommunication. The AC power connections have been omitted for simplicity. The UCM 10 is a universal unit, as the name implies, and becomes set for the drive with which it is associated in the manner already described upon its being plugged into the particular card connector 12 of the motherboard corresponding to the EIM 30 of the specific drive unit 32 (in effect becoming dedicated to the control of that drive unit upon plug-in).

As an optional capability, the UCM 10 may be coupled directly to its corresponding EIM 30 over an optional parallel link, indicated by the broken line 40, for more direct control without reliance on communication over the serial data link 38 through the CMs 26 and 36.

Also, as indicated in Fig. 2, an additional EIM, such as 34, can be connected to the UCM 10 (via the serial data link 38 or an optional parallel data link 41) to provide additional input and output control circuits if the single EIM 30 does not have enough circuits to accommodate a given drive 32. In such a case, the additional EIM 34 would also be connected to the drive unit 32 control circuit.

Each EIM, such as 30, comprises an appropriate number of input/output modules which provide an optical isolation interface between the low voltage control circuit side and the higher voltage (such as 120 volts AC, 240 volts AC, etc.) power drive side which is coupled to the load. In a typical interface module of this type, the input drives an LED, optically coupled to a photocell, which then drives output circuitry. Such modules are available from several manufacturers. One such device is marketed under the trade name "Crydom", manufactured by International Rectifier.

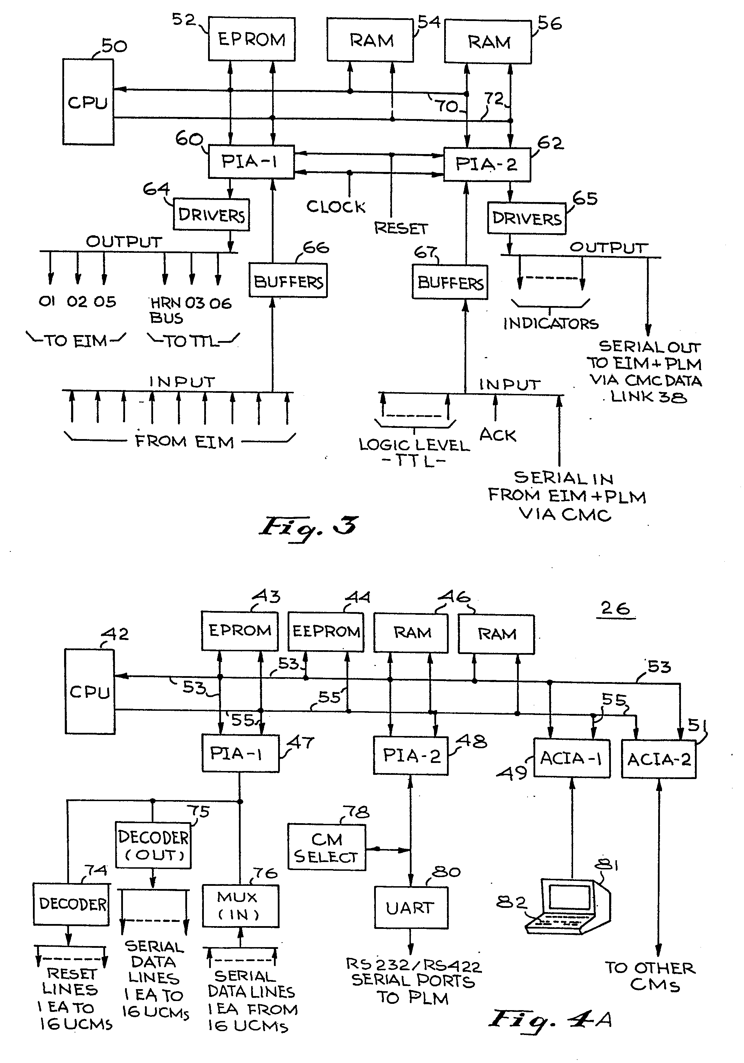

Fig. 3 is a functional block diagram representing the components making up an individual UCM 10. It is shown comprising an individual microprocessor unit (the CPU 50), an electrically programmable read only memory (EPROM) 52, a pair of static RAMs (random access memory) 54, 56, and a pair of peripheral interface adaptors (PIA) 60 and 62, together with associated output drivers 64, 65 and input signal buffers 66, 67. The first PIA 60 and its associated drivers 64 and buffers 66 are provided for the optional direct parallel link connection with associated EIMs (the links 40, 41 of Fig. 2). Output signal paths are also coupled to transistor-transistor logic (TTL) circuitry. One such output connects to a horn bus, which may be activated by signals from a number of UCMs associated with a plurality of interrelated drives in an overall system, such as a conveyor system. TTL circuitry is also provided at the terminal block on the UCM motherboard for a given UCM to permit hard wiring connections between a pair of UCMs, for example. Such a connection may duplicate a software interlock, but there may be situations where the actual wiring is desirable.

The second PIA 62 with its associated drivers 65 and buffers 67 is connected to provide serial data communication with a corresponding EIM through the serial data link 38. In addition, signal lines from the drivers 65 are connected to control the states of the indicator lights 20 on the front panel 16 (Fig. 1) and input lines are provided to set the UCM program in accordance with logic level states stored in the CMC 26. Each PIA 60, 62 is individually connected with the respective CPU 50, EPROM 52, and RAMS 54, 56 via connecting paths 70, 72.

The EPROM 52 is provided with a universal control program capable of controlling any drive unit of whatever nature with which the universal control module is to be associated. This universal control program in the EPROM 52 includes a plurality of software selectable "P" switches to configure the control program as required for an individual drive unit. These "P" switches are typically gates (AND, OR, NAND, NOR, etc.) through which various operational signal paths are connected and to which gating signals may be applied to control gate condition. Thus the signal paths are rendered open or closed under control of the "P" switches.

Storage of the "P" switch settings within the UCM occurs in the RAMs 54, 56 along with storage of other data pertinent to the operation of the control program, such as the monitored status of the associated drive, the time delay settings which may be appropriate for the drive, and the like. The UCM rack is pre-programmed by storing the "P" switch settings in non-volatile memory in the associated CMC. Thus, automatic reset of the "P" switch settings in any given UCM occurs upon power-up or upon installation of an individual UCM unit in a previously programmed UCM rack. The Universal Control Module represented in Fig. 3 contains the circuitry and the program logic to monitor drive safeties and operating variables, and is effective to generate commands to control an associated drive in accordance with set program instructions. In the preferred embodiment, the UCM will accept up to ten input circuits and is capable of outputting three command circuits. The UCM includes programmable time delays for pre-warning circuits, and can provide timed bypass of designated input circuits with initial activation of an output circuit.

The UCM represented in Fig. 3 also includes circuitry to indicate the status of drive safeties and operating variables at the UCM, by energizing various ones of the indicators on the front panel (Fig. 1), and to transmit this data via the associated CMC to one or more Supervisory Stations (described hereinbelow). The UCM also includes circuitry to receive remote commands from one or more of such Supervisory Stations and to output such commands, if not inhibited by the preset UCM program. The preferred embodiment has the capability of accepting up to five different functional commands. Circuitry is also included for transferring operational commands to a remote Supervisory Station, the UCM, or both. Transfer switching from either the UCM, a Supervisory Station, or a combination of both is programmable. As noted above, either parallel or serial communication between the UCM and its associated EIM can be effected by the branch including the first PIA 60 (for parallel) or the second PIA 62 (for serial). The circuitry associated with the second PIA 62 can also provide communication over a serial data link with a Programmable Logic Module (PLM), shown in Fig. 2 and described hereinafter. Finally, there is provision, through connection to the input and output leads associated with the drivers 64 and buffers 67, for optional, hard wired interlocking circuitry between associated UCMs. Such optional circuit connections are redundant, being provided in addition to the software interlocks via serial data link channels.

Each Electrical Interface Module, such as the EIM 30 in Fig. 2 (of which there are one or two per associated drive unit), may have up to eight optically isolated plug-in interface circuits. The standard EIM module will accept up to six input circuits and two output circuits, as is indicated by the arrows associated with the EIM 30'. As noted, these units provide the interface between the system five-volt TTL signal circuits and the 120/240 volt AC control circuits. Each EIM also has terminal blocks for connection to 120/240 volt AC mains. Each EIM includes circuitry for either parallel or serial communication between the EIM and its associated UCM, and also includes circuitry for serial communication with a Programmable Logic Module.

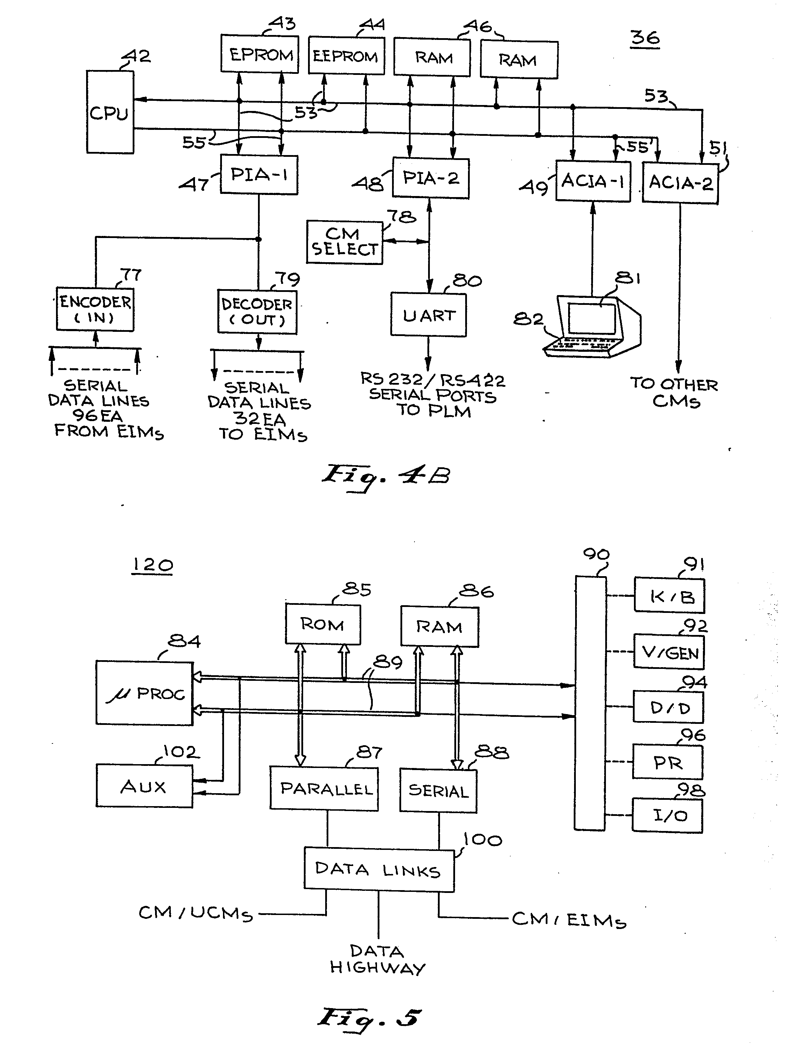

Fig. 4A represents a Communications Module for the Universal Control Module (CMC) in functional block diagram form. In this figure, the CMC 26 is shown comprising a microprocessor 42, non-volatile memories in the form of an electrically programmable read only memory (EPROM) 43 and an electrically erasable and programmable read only memory (EEPROM) 44, a pair of random access memory (RAM) modules 46, a pair of peripheral interface adaptors 47, 48 and a pair of asynchronous communications interface adaptors 49, 51, all interconnected via connecting paths 53, 55. Output signals from the first peripheral interface adaptor 47 are applied via separate decoders 74, 75 (according to the type of signal) to RESET lines or serial data lines for the respective UCMs (up to a maximum of 16) associated with the particular CMC 26. The peripheral - interface adaptor 47 also receives data from the serial data lines of the associated UCMs through a multiplexing input stage 76.

Associated with the second peripheral interface adaptor 48 is a CM selector 78 which allows up to 32 different CMs to be accessed over a single communications channel. A Universal Asynchronous Receiver/Transmitter (UART) 80 provides either RS-422 or RS-232 serial communication between each CM and the PLM.

The interface adaptors 49, 51 provide for the transmission of control signals between the CMC 26 and a hand terminal (comprising a monitor 81 and keyboard 82), plus the transmission of data between the CMC 26 and other CMIs (typically the CMIs of Fig. 4B).

Thus the CMC 26 of Fig. 4A is interposed between a set of associated UCMs and other CMs which may be either other CMCs associated with other sets of Universal Control Modules or may be CMIs associated with respective sets of Electrical Interface Modules, as generally indicated in Fig. 2. Also, the CMC 26 can provide interchange of data and control signals between its associated UCMs and a Programmable Logic Module (PLM) in a second level system, also as indicated in Fig. 2.

Fig. 4B is a corresponding functional block diagram for a CMI 36. The basic circuitry of the CMI 36 is very much like that of the CMC 26 of Fig. 4A and, where appropriate, the same reference numerals have been used to identify like components. The difference in the CMI 36 of Fig. 4B resides in the input encoder 77 which receives up to 96 serial data lines from the set of associated Electrical Interface Modules (six each from up to 16 EIMs) and applies these signals to the first peripheral interface adaptor 47. The output decoder 79 applies signals from the first peripheral interface adaptor 47 to 32 serial data lines leading to the set of associated EIMs (two each to up to 16 EIMs). Thus the CMI 36 of Fig. 4B has the capability of communicating with its set of associated EIMs, with other CMs (both CMIs and CMCs) and with a programmable logic module, in the manner illustrated in Fig. 4A, as well as communicating with a terminal having monitor 81 and keyboard 82.

In each of the CMs 26 and 36, Figs. 4A and 4B, respectively, the EEPROM 44 provides non-volatile storage of the UCM "P" switch settings as programmed for the respective drives by means of, for example, the terminal 81, 82 or an associated PLM. These in turn control the states of the "P" switches in the associated UCMs. The EPROM 43 contains operating programs which control the storage of the "P" switch settings within the EEPROM 44 and RAMS 46 along with storage of other data pertinent to the operation of the control program upon power-up or upon plug-in of an individual UCM or EIM unit in a previously programmed CM stage. Other signals developed in the operation of the associated system drives are also stored in the RAMS 46 which interact with the microprocessor 42 to develop the appropriate output control signals.

Returning to a consideration of Fig. 2, the diagram thereof shows the first level system described hereinabove connected to additional components making up a second level system in accordance with the invention. These additional components comprise a Programmable Logic Module (PLM) 120 coupled to provide control of the first level system just described and other first level systems, comprising additional Communication Modules and associated Universal Control Modules and Electric Interface Modules, via additional serial data links 38. In such a second level system, up to eight first level systems may be controlled from a single PLM 120.

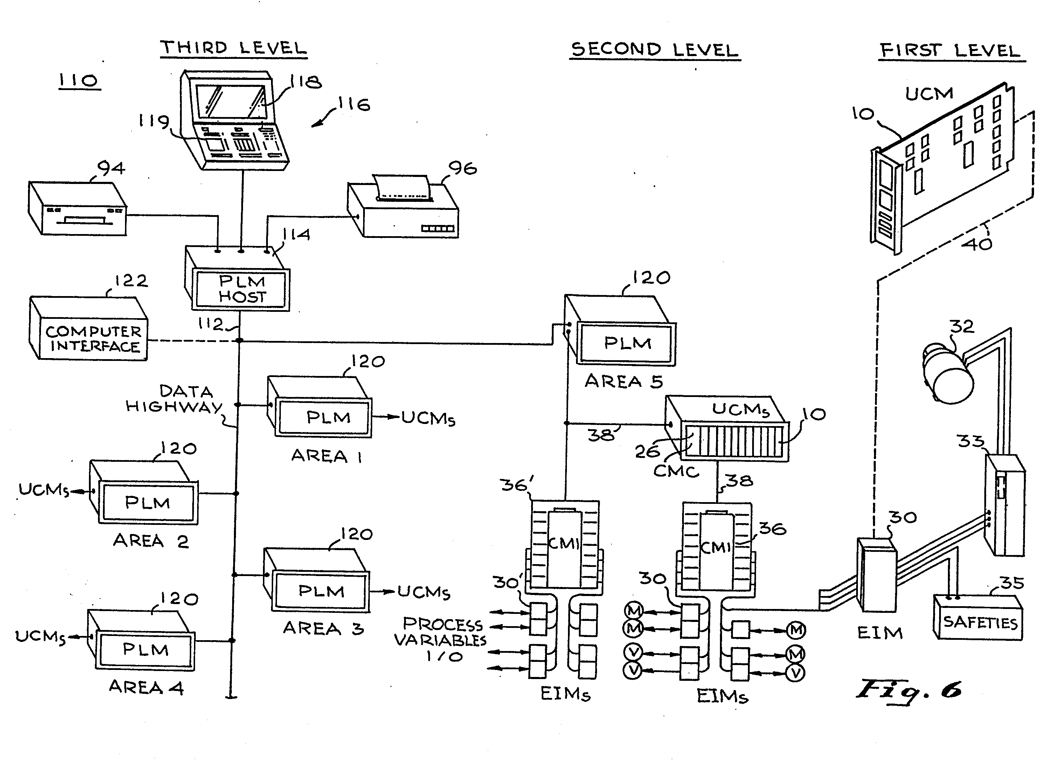

Fig. 5 is a functional block diagram representing the Programmable Logic Module 120. This is shown comprising a microprocessor 84, both ROM 85 and static RAM 86 memory plus parallel and serial output data ports 87, 88 interlinked with each other via address and data busses 89. The PLM 120 also includes peripheral connectors 90 for access to input keyboard 91, video generator 92, disc drive 94, printer 96, and control I/O 98, the latter providing input and output access for switching commands to pilot lights and other unit controls. Data link ports 100 are provided for RS-232 and RS-422 communication via CMCs to associated UCMs, CMIs to associated EIMs, and via a data highway (see Fig. 6) to other PLMs or to a host computer. An auxiliary port 102 is also provided, as shown in Fig. 5, for coupling to a hand-held terminal or video monitor to facilitate system test and maintenance. Typically, one such PLM 120 is provided for each operating area or second level system, as shown in Fig. 2. The module includes a package of utility programs to facilitate user programming of the required system logic.

Fig. 6 is a schematic block diagram illustrating a plurality of second level systems of the type shown in Fig. 2 interconnected to make up a third level system 110 for complete distributive control and monitoring of a comprehensive overall system, such as may be utilized in a factory, a process plant, a power station, a materials handling system or the like. As shown in Fig. 6, five distinct second level systems are interconnected via a data highway 112, each separate second level system being designated as one of five areas. The second level system for Area #5 is represented in somewhat greater detail than the others, and it will be recognized as corresponding to the system shown in Fig. 2. Not only are the various second level systems in Fig. 6 interconnected for intercommunication with each other via the data highway 112 connected to the respective PLMs 120, but they are also connected via the data highway 112 to a host PLM 114 of a Supervisory Control Station 116. The Supervisory Control Station may include a disc drive 94, a printer 96, a video monitor 118 with keyboard 119 and other peripheral devices as shown in the PLM diagram of Fig. 5. It will be understood that the Supervisory Control Station 116 may be connected to a single PLM 120 for controlling a second level system, as indicated in Fig. 5, if the drives to be controlled are not so extensive as to require a plurality of second level systems. Also indicated in Fig. 6 is an alternate option of coupling an interface 122 with the user's own computer system to the data highway 112 in order to permit control input from such a computer system.

Summarizing, the first level system, as shown in Fig. 6, involves the direct control of a single drive by a dedicated Universal Control Module. In the depicted first level system portion of Fig. 6, a UCM 10 is shown coupled to an EIM 30 via a parallel data link 40 which extends directly between the UCM and EIM. As previously discussed, this parallel data link 40 is an optional connection. It will be understood that the UCM 10 is mounted in a rack associated with a CMC 26 (as indicated for the second level system) which provides intercommunication between the UCM 10 and EIM 30 over a serial data link 38 via the associated CMC 26 and CMI 36, irrespective of the optional parallel link 40. As shown in Fig. 6, the EIM 30 of the first level system is coupled to a motor 32 through a motor starter 33. Input/output (I/O) connections may extend to other circuit elements related to the motor 32 as the drive being controlled in the first level system, such as the safeties 35. Other types of drives which may be controlled in such a system are motor valves, solenoid operators, circuit breakers, reversible motors, two-speed motors, etc., as shown for the group of EIMs 30 of the second level system of Fig. 6.

Referring to the second level system, a single group of UCMs will typically include 16 UCMs and 16 associated EIMs. The number of groups is typically expandable up to a total of eight groups communicating over a common serial data link 38. In the second level system depicted in Fig. 6, the PLM 120 is also capable of directly controlling of one or more CMIs, such as the CMI 36' associated with up to 16 EIMs 30', each of which is coupled for operation with eight I/O process variables. Each CMI group can accommodate 16 associated EIMs, and this direct control link is expandable to eight groups of CMIs/EIMs. Thus, the PLM 120, such as is shown in the second level system of Area #5 is capable of handling a total of 1,024 I/O process variables for monitoring and control, apart from its control of the UCMs.

A plurality of such second level systems may be coupled to the data highway 112 for operation and control from a Supervisory Control Station 116 comprising a third level system in the manner shown in Fig. 6 and described hereinabove.

By virtue of the various arrangements in accordance with the present invention as shown and described hereinabove, complete and effective control of one or a plurality of electrical drive units may be accomplished in a manner which provides for improved reliability, flexibility and ease of programming, relative to previously known systems. For example, because of the Universal Control Module concept of this invention, the control of any type of individual drive can be specifically tailored to the needs and characteristics of that drive by the simple expedient of merely plugging the Universal Control Module into a mounting rack associated with the drive and containing a Communication Module which has been pre-programmed by standard pre-established software application to adapt the UCM to the drive. At the same time, the drive control can be operated in conjunction with other related drive units, again by the application of modular software programming, all operating in an integrated system. Depending upon the complexity and extent of the drive units to be controlled, the arrangements in accordance with the invention lend themselves to standard program control at the single-loop stand-alone level for each individual drive unit, supplemented by software programming of inter-related drives for a control system for a complete process plant or power station.

## CLAIMS

1.  A universal control module (10) for controlling an individual electrical drive unit (30, 34) with which it may be associated including a microprocessor (50), non-volatile read only memory (52) containing a universal control program having a plurality of settable gate elements, random access memory (54, 56) for storing said program upon the application of power to the module, interface equipment (60, 62), and electrical circuit paths (70, 72) interconnecting the microprocessor (50), the read only memory (52), the random access memory (54, 56), and the interface equipment (60, 62); characterized by apparatus (67, 62) for applying preset signal conditions to the random access memory (54, 56) to adapt the control program to the operating characteristics of the associated drive unit (30, 34) upon operative association of the control module (10) with an external coupling unit (26) containing said preset signal conditions.

2.  The module of claim 1 wherein the plurality of settable gate elements constitutes software programmable gate elements, and further characterized by apparatus (62, 67) for setting the condition of the gate elements in accordance with said preset signal conditions.

3.  The module of claim 1 or claim 2 further characterized by the control module (10) including display elements (20) which are selectively energizable to indicate operating conditions of the associated drive units.

4.  The module of any one of claims 1-3 further characterized by a printed circuit board (18) mounting the microprocessor (50), the non-volatile read only memory (52), the random access memory (54, 56), the interface equipment (60, 62) and the electrical circuit paths (70, 72) in coupled relationship with releasable interconnecting elements (12) for connecting the electrical circuit paths to circuitry in the external coupling unit.

5. The module of any one of claims 1-4 further characterized by the universal control program being adaptable in response to said preset signal conditions to control any one of a plurality of different types of drive units (30, 34) with which the module may be associated.

6. Apparatus including a plurality of the universal control modules of any one of claims 1-5 for controlling associated electrical drive units, characterized by the universal control modules (10) being programmable to control any selected one of the electrical drive units (30, 34).

7. The apparatus of claim 6 further characterized by racks (12, 14) for releasably mounting a plurality of the universal control modules (10) in electrically coupled relationship with corresponding drive units, programmable memory (43, 44) associated with the mounting racks (12, 14) for storing preset signal conditions corresponding to the operating characteristics of the associated drive units (30, 34), and circuitry (26) for transferring said signal conditions corresponding to a given drive unit (30, 34) to the universal control module (10) mounted in a rack (12) corresponding to that drive unit in order to adapt the module to control that drive unit.

8.    The apparatus of claim 6 or claim 7 further characterized by the universal control module (10) including means (26) for receiving and transmitting signals relating to the control of an associated drive unit, means (54, 56) for storing the signal conditions transferred from the programmable means, and means (60, 64, 66, 120) for processing signals received from the associated drive unit (30, 34) and generating control signals to control the drive unit in accordance with said stored signal conditions.

9.    The apparatus of any one of claims 6-8 wherein the universal control module (10) is further characterized by drive unit interface equipment coupled between an individual universal control module (10) and its associated drive unit (30, 34) for converting signals between signal level circuitry and power level circuitry.

10.    The apparatus of claim 9 wherein the drive unit interface equipment is characterized by devices for providing electrical isolation between the signal level circuitry and the power level circuitry.

11.    The apparatus of any one of claims 8-10 further characterized by the means for receiving and transmitting signals including first interface circuitry (120) for processing said signals in parallel between the universal control module (10) and the drive unit interface equipment.

12.    The apparatus of any one of claims 8-10 further characterized by the means for receiving and transmitting signals including second interface circuitry (26) for serial processing of signals between the universal control member (10) and the drive unit interface equipment.

13. The apparatus of claim 9 further characterized by serial data communication means (26, 38, 120) coupled between the universal control modules (10) and the drive unit interface equipment (30) to establish a single basic level control system.

14. The apparatus of claim 13 characterized by means (26) for processing serial data signals transmitted over the serial data communication means between the universal control modules and the drive unit interface equipment, and further characterized by the programmable memory including a microprocessor (42) and non-volatile electrically erasable and programmable read only memory (44) coupled to the microprocessor for storing the preset signal conditions.

15. The apparatus of claim 14 further characterized by a programming device (81) coupled to establish selected preset signal conditions in the programmable memory.

16. The apparatus of claim 15 further characterized by the signal processing means including means (120) for monitoring and controlling signals between the universal control module (10) and the drive unit interface equipment (30), and between the universal control module, the drive unit interface equipment and the programming device.

17. The apparatus of claim 15 characterized by the programming device including programmable logic means including a microprocessor, ROM and RAM memory, and further characterized by additional serial data communication means (112) interconnecting the programming device with a plurality of basic level control systems via the respective programmable memories of each basic level control system.

18. The apparatus of claim 17 further characterized by the programming device (120), the plurality of basic level control systems and the additional data communication means (38) forming a second level control system.

19. The apparatus of claim 17 characterized by the programmable logic means (120) further including interconnecting circuit paths for connecting with peripheral display and control devices.

20. The apparatus of claim 18 further characterized by a plurality of second level control systems, a supervisory control station (114) having computer peripheral terminals (90), and circuitry (112) interconnecting each of said second level control systems with the other second level control systems of said plurality and with the supervisory control station for data communication.

21. The apparatus of claim 6 characterized by the universal control module (10) including non-volatile read only memory (52) containing a universal control program having a plurality of interconnected gate elements and random access memory in which the program is stored upon application of power to the module, the conditions of said gate elements being selectable to adapt the control module to correspond to the operating characteristics of a selected drive unit upon operative association of the universal control module therewith.

1/4

0109734

Fig. 1

Fig. 2

0109734

2/4

Fig. 3

Fig. 4A

26

0109734

36

| 43 | 44 | 46 |
|---|---|---|
| EPROM | EEPROM | RAM | RAM |

42
CPU

53
55

47 PIA-1

48 PIA-2

78
CM
SELECT

49 ACIA-1

ACIA-2
51
55'
53

77
ENCODER
(IN)

79
DECODER
(OUT)

80
UART

81

82

SERIAL
DATA LINES
96 EA
FROM EIMs

SERIAL
DATA LINES
32 EA
TO EIMs

RS 232/ RS 422
SERIAL PORTS
TO PLM

TO OTHER
CMs

*Fig. 4B*

120

85
ROM

86
RAM

90

91
K/B

84
µ PROC

89

92
V/GEN

94
D/D

102
AUX

87
PARALLEL

88
SERIAL

96
PR

98
I/O

100
DATA LINKS

CM/UCMs

CM/EIMs

DATA
HIGHWAY

*Fig. 5*

Fig. 6

THIRD LEVEL    SECOND LEVEL    FIRST LEVEL

110

118
116
119

UCM
10

94

96

114

PLM HOST

122

COMPUTER INTERFACE

112

120

PLM
AREA 5

120

DATA HIGHWAY

PLM → UCMs
AREA 1

38

UCMs
10
26
CMC

32

120

UCMs → PLM
AREA 2

36'

38

33

120

120

PLM → UCMs
AREA 3

CM1

30

CM1
36

30

120

UCMs → PLM
AREA 4

30'

PROCESS VARIABLES I/O

M
M
V
V

EIM

30

M
M
V

EIM

35
SAFETIES

EIMs

EIMs

4/4

0109734